Europäisches Patentamt

(19) European Patent Office

Office européen des brevets

(11) Publication number: **0 198 050 B1**

(12) **EUROPEAN PATENT SPECIFICATION**

(45) Date of publication of patent specification: **26.08.92**  (51) Int. Cl.⁵: **B01D 53/00**

(21) Application number: **85905350.6**

(22) Date of filing: **09.10.85**

(86) International application number:
**PCT/US85/01986**

(87) International publication number:
**WO 86/02283 (24.04.86 86/09)**

(54) **AIR SCRUBBING PROCESS.**

(30) Priority: **17.10.84 US 662331**

(43) Date of publication of application:
**22.10.86 Bulletin  86/43**

(45) Publication of the grant of the patent:
**26.08.92 Bulletin  92/35**

(84) Designated Contracting States:
**AT BE CH DE FR GB IT LI LU NL SE**

(56) References cited:
**JP-A-94 489**
**US-A- 4 353 715**
**US-A- 4 426 210**
**US-A- 4 528 001**

**JAPANESE PATENTS REPORT, vol. 80, no. 47,
13th November 1980, Chemical Engineering,
page 2, Derwent Publications Ltd, London,
GB; & JP-A-52 119 490 (MATSUSHITA ELEC.
IND. K.K.) 13-11-1980**
(73) Proprietor: **Bilgore, Russell
Suite 1006 575 Madison Avenue
New York, N.Y. 10022(US)**

(72) Inventor: **Bilgore, Russell
Suite 1006 575 Madison Avenue
New York, N.Y. 10022(US)**

(74) Representative: **Colgan, Stephen James et al
CARPMAELS & RANSFORD 43 Bloomsbury
Square
London WC1A 2RA(GB)**

## Description

Technical Field

This invention relates to the purification of air by scrubbing it in contact means such as a scrubber utilizing an effective scrubbing liquid which can be reconditioned for reuse or a filter on which the scrubbing liquid is dripped.

Background Art

Air pollutants are of particulate character, of gaseous character, or both, and such pollutants result principally from industry or combustion. Industrial sources include ventilation products from local exhaust systems and process waste discharges, as well as from combustion. Air pollutants may be more or less odorous and/or pungent.

Known pollution control systems do not completely or effectively remove certain pollutants such as those arising from paint booths, plastics fabricators and some petroleum processes.

Emissions from sewage and sludge treatment, restaurants, renderers, brewers and distillers, fish reduction and processing plants, pulp and paper mills, fertilizer processors and manufacturers, poultry and poultry processing operations, coffee roasting, garbage and garbage incineration, paint booths, internal combustion exhaust, plastics industries, petroleum processes, smelting and mining operations, swine, and other domestic food processing operations, various chemical operations and operations such as printing where odoriferous materials are employed are amenable to treatment at least to some extent by the present invention.

Technology which may be effective for deodorizing in some types of operation is prohibitively expensive for use in small plants. Thus, a catalytic afterburner that can be used for controlling methyl styrene has both a high basic cost and large operating expense.

Removal of air pollutants by scrubbing usually is not very effective and such odorous materials as are removed must subsequently be separated from the scrubbing liquid and disposed of if the scrubbing liquid is to be reused or the spent scrubbing liquid discarded in a modern sanitary sewer system.

The objective of prior art air-cleaning processes has been to remove particulate matter and/or noxious gases and pungency. To remove particulate material, cyclone separators, bag filters and electrostatic precipitators have been used. In wet scrubbers, water is sprayed in atomized condition over a geometric shape to remove water-soluble gases. Chemicals may be added to the liquid to provide improved absorption. These devices provide for mixing a gas stream under treatment with water or a chemical solution so that gases are taken into solution and possibly converted chemically as well. Filters packed with solid absorbents are used to adsorb impurities from air.

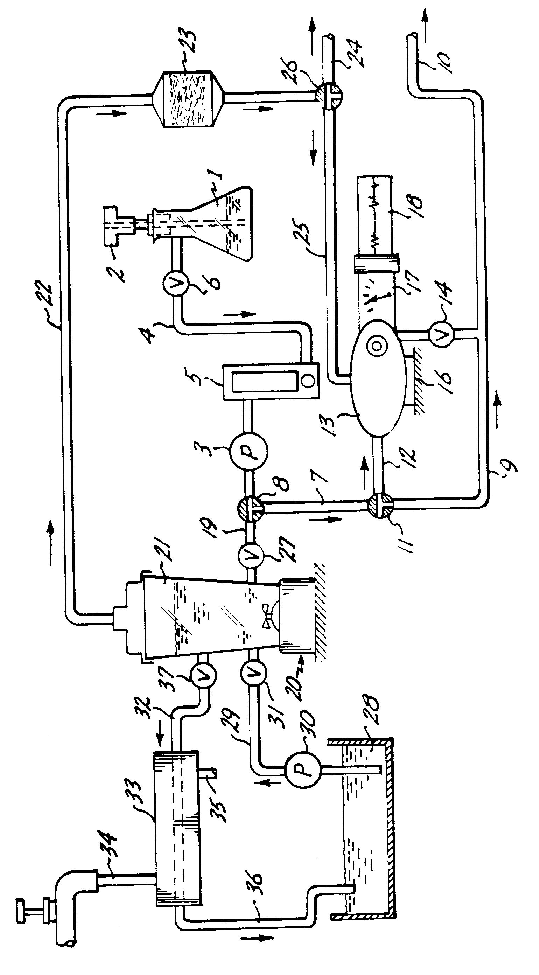

A typical cyclonic spray scrubber is shown in Figure 2 and a typical venturi scrubber is shown in Figure 3 on page 241 of Volume 1 of the McGraw-Hill Encyclopedia of Science and Technology, 1971 edition. A cyclone dust separator, a cloth collector and an additional view of a cyclonic liquid scrubber are shown on pages 333 and 334 of Volume 4 of the same publication.

Packed beds providing a bed or layer of packing composed of granular material such as sand, coke, gravel and ceramic rings, or fibrous materials such as glass wool, steel wool and texture staples are used to remove particulates. Packed towers, plate towers and spray towers, as well as filters are used to adsorb gases.

The encyclopedia points out at Volume 4, page 334, column 1, that packed beds, because of a gradual plugging caused by particle accumulation, are usually limited in use to collecting particles present in the gas at low concentration unless some provision is made for removing the dust, for example by periodic or continuous withdrawal of part of the packing for cleaning.

The encyclopedia states in column 2 of the same page that an extremely wide variety of scrubbing equipment is available, ranging from simple modifications of corresponding dry units to permit liquid addition, to devices specifically designed for wet operation only.

In column 2 on page 47 of Volume 6 of the same encyclopedia it is stated that recovery of solute gases is generally achieved by contacting the gas streams with a liquid that offers specific or selective solubility for the solute gas to be recovered. By such procedure mercaptans can be removed from natural gas, or carbon monoxide can be recovered from process streams in petrochemical synthesis. Fluorides can be recovered from emissions from fertilizer and aluminum manufacture and sulfur dioxide can be recovered from metallurgical operations. Figure 1 on page 48 shows a diagram of a packed tower for gas absorption, Figure 2 shows a wet cyclone peripheral spray tower and Figure 3 on page 49 shows a plate tower or impingement baffle scrubber. Page 49 states that the packed tower is used most extensively in absorption operations because of its inherent differential mechanism and low power consumption.

Pages 205 and 206 of Volume 13 of the same encyclopedia states that volatile material can be stripped from scrubbing liquid in order to permit recovery of the absorbed solute and recycling of the solvent. Such stripping can be accomplished by pressure reduction, the application of heat or the use of an inert gas as a stripping vapor or some combination of such procedures. Steam can be used as a stripping vapor for a system which is not miscible with water.

Gladu U.S. Patent No. 3,660,045, issued May 2, 1972, shows an air-purifying scrubber for removing both gaseous pollutants and particulate pollutants, especially from smoke. Nozzles project jets of combustible gas into the polluted air to heat fumes, such as from a pulp mill, paper mill or smelter, so as to remove or convert the odorous components of the smoke into unobjectionable fumes as stated at column 4, lines 36 to 45. Subsequently, the fumes and smoke are passed through a washing zone into which nozzles project water sprays (column 4, lines 62 to 65). The heating and combustion will complete the oxidation of carbon compounds of the gas and the oxidation or conversion of other noxious and/or odorous components of the gas, such as those containing sulfur (column 4, lines 73 to column 5, line 3). The water from the water sprays will both entrain particulate material and dissolve to a greater or lesser extent water-soluble components of the smoke (column 5, lines 6 to 9).

As stated in column 2, on page 242 of Volume 1 of the McGraw-Hill Encyclopedia referred to above, in incineration of municipal garbage volatiles are driven off by destructive distillation and ignite from the heat of the combustion chamber. The gas is passed through a series of oxidation changes but must be heated above 649°C (1200 degrees F.) to destroy odors. The end products of the incineration pass through expansion chambers, fly ash collectors, wet scrubbers and, in some instances, electrostatic precipitators. The end products include carbon dioxide, carbon monoxide, water, oxides of nitrogen, aldehydes, unoxidized or unburned hydrocarbons and particulate matter comprising unburned carbon, mineral oxides and unburned refuse.

Thus various procedures have been used to purify air with greater or less success but conventional procedures have been unable to remove certain air pollutants. Also, air-filtering processes generally have required the expenditure of considerable power, or have required the utilization of expensive equipment and/or materials, or have been of limited capacity, or have required frequent and expensive reconditioning of sorption materials.

Adsorbtion beds packed with activated carbon, activated alumina, activated bauxite, acid-treated clays, iron oxide, magnesia and fuller's earth have been used to adsorb gases as stated in the Kirk-Othmer Encyclopedia, Second Edition, Volume 1, page 460. Such solid materials are generally expensive so that it is the practice to revitalize them to provide regenerated adsorptive material and this operation must be performed frequently because of the limited adsorptive capacity of such substances. The bed material must be physically removed and transported from the location of the filter bed to the reprocessing equipment. The regenerating operation results in significant physical loss of the filter bed material, as well as the material absorbed by the filter material being lost.

In some installations, instead of using solid filter material, chemically active liquids are used in a scrubber. In order for such scrubbing solutions to be effective, intricate and large applicator equipment is employed to provide sufficient residence or contact time for the purging chemical reaction to occur.

To reclaim liquid scrubbing media, copius water washing, filtration, gravity settling, steam stripping, sonic or ultrasonic treatment, or irradiation such as by exposure to selected ultraviolet light, or reaction with one or more of selected reactants may be utilized to effect removal of the sorbed pollutants from the scrubbing liquid to prepare it for reuse.

Disclosure of the Invention

In accordance with one aspect of the present invention there is provided a process for purifying polluted air which comprises contacting the polluted air with scrubbing liquid containing oil, characterised in that the oil has an average iodine value greater than 90 and is an unsaturated vegetable or marine oil.

If the entire scrubbing liquid is not unsaturated fatty oil, a substantial portion of the remainder of the scrubbing liquid is water with which the oil forms an emulsion. Also, the scrubbing liquid can include a small proportion of a detergent or wetting agent. In addition, the emulsion may carry reactants for reaction with impurities sorbed from polluted air to form precipitates that can be washed out of spent scrubbing liquid or be removed by distillation. During the passage of air through a path into which the scrubbing liquid is sprayed, the air may be subjected to sunlight and/or ultraviolet light to promote polymerisation of vaporous pollutants, such as styrene, for converting them into solid particulate form, such as polystyrene. Representative other pollutants that may be removed from the air to purify it include acrolein, octanol-1, octanol-2, triethylamine, pyridine, cell cream (putrified), styrene, butyric acid, phenol, ammonium thioglycolate, amyl acetate, ammonium hydroxide, p-anisaldehyde, furfural, formaldehyde, methylethyl ketone, glacial acetic acid, propionic acid, toluene, valeric acid, diethylamine, methylamine, methyl chloride, carbon tetrachloride, malathion, orthodichlorobenzene, cadaverine, skatol, soluble fish waste, beef rendering, chicken rendering, onion oil, garlic oil, volatile amines, volatile fatty acids, sewage, sulfurous material including hydrogen sulphide, and carbon disulphide petroleum distillate, trichloroethylene, pentachlorophenol, paint, paint solvents, hydrocarbon material, plastics and combustion products.

The scrubbing liquid utilized in the present invention is effective and economical for removing adulterants from air, including such adulterants as odors and pungent and toxic substances. The process can be used to purify air in an industrial plant so that it can be recycled into the plant with minimal loss or gain of heat and thus minimize the need for increased heating in the winter or cooling in the summer, with minimal change in humidity of the air being purified so that modification of the purified air humidity will not be necessary. After treatment of the air the scrubbing liquid can be precipitated readily from the air stream so that no appreciable amount of the scrubbing liquid will be lost in the air discharged from the treating apparatus or the scrubbing liquid itself become an adulterant of the air. Nevertheless, the scrubbing liquid is harmless so that any portion of it which is carried off in the treated air will be innocuous and not unpleasant to people or animals breathing such air. The process, while effective, can be accomplished quickly and with minimum power utilization, and air adulterants can be removed from the scrubbing liquid without great difficulty so that the reconditioned scrubbing liquid can be reused for air purification purposes. The scrubbing liquid is readily available and inexpensive and does not create difficult disposal problems. Liquid pollutants that have been sorbed by the scrubbing liquid can be in a form that can be used beneficially or discarded without creating problems.

According to another aspect of this invention there is provided a composition comprising oil for purifying polluted air by contact with the polluted air for sorbing pollutant from such air, characterised in that the oil has an average iodine value greater than 90 and is an unsaturated vegetable or marine oil.

Preferably the oil is a drying or semidrying oil.

Best Mode for Carrying Out the Invention

An essential component, if not the principal component, of the scrubbing liquid utilized in the air purification process of the present invention is fatty oil, preferably vegetable oil, but the oil may be marine oil. The preferred fatty oils used in or for the scrubbing liquid because of their ready availability and effectiveness are:

soybean oil
cottonseed oil
groundnut or peanut oil
corn oil
safflower oil
sunflower seed oil
rape or rapeseed oil
Other fatty oils that may be used but are not as plentiful or economical are:
tung oil
walnut oil
sesame seed oil
linseed oil
hempseed oil
wheat-germ oil
almond oil        While marine oils can be used instead of vegetable oils, it might, in some cases, be undesirable to use such oils because of their distinctive odor which, instead of deodorizing the air, could impart a different, and perhaps disagreeable, odor to the air, unless the oil used had been deodorized prior to use. The oil used in or for the scrubbing liquid should, for many applications, be substantially odorless.

Of the oils listed above and others which could be used, the following oils are classified in their definitions in Webster's Third New International Dictionary, Unabridged, as follows:

Drying Vegetable Oil

candlenut oil

dehydrated castor oil
hempseed oil
linseed oil
oiticica oil
perilla oil
poppy-seed oil
safflower oil
stillingia oil
tung oil

Drying Marine Oils

menhaden oil
sardine oil

Drying or Semidrying Vegetable Oil

soybean oil
sunflower oil or sunflower-seed oil

Semidrying Vegetable Oil

corn oil
cottonseed oil
kapok oil
sesame oil

Semidrying or Nondrying Vegetable Oil

rape oil or rapeseed oil

Webster's Third New International Dictionary defines the term "drying oil" as (emphasis supplied):

: a natural or synthetic unsaturated fatty oil (as linseed oil or dehydrated castor oil) that changes readily to a hard, tough, elastic substance when exposed in a thin film to the air and may serve as a vehicle in paints, varnishes, and printing inks.

The same dictionary defines the term "semidrying" as:

: that dries imperfectly or slowly--used of fatty oils (as cottonseed oil) intermediate between drying oils like linseed oil and nondrying oils.
Thus semidrying oils are less unsaturated than drying oils. In order to determine the degree of unsaturation of fatty oils, the "iodine number" or "iodine value" is used, that term being defined in Webster's Third New International Dictionary as (emphasis supplied in part):
: a measure of the unsaturation of a substance (as an oil or fat) expressed as the number of grams of iodine or equivalent halogen absorbed by 100 grams of the substance ⟨the iodine numbers of linseed oil, olive oil, and coconut oil are approximately 175-201, 77-91, and 8-9.5, respectively⟩.
The iodine values of the preferred fatty oils used in or for the scrubbing liquid specified above are listed below with their iodine values according to Lange, Handbook of Chemistry, Tenth Edition, 1961, pages 756 to 763, Kirk-Othmer Encyclopedia of Chemical Technology, Second Completely revised edition, Volume 7, page 404 and Volume 8, page 778-782, and Van Nostrands, Scientific Encyclopedia, Sixth Edition, tables on pages 2915, 2916 and 2917.

| IODINE VALUE | | | | |
|---|---|---|---|---|
| UNSATURATED OIL | LANGE (pp. 760-763) | LANGE (pp. 756-759) | KIRK-OTHMER | VAN NOSTRANDS |
| corn oil | 113-126 | 111-128 | 103-128 | |
| cottonseed oil | 111-115 | 103-111.3 | 99-113 | 109-116 |
| groundnut or peanut oil | 96-103 | 88-98 | 84-100 | 88-98 |
| rape or rapeseed oil | 99-106 | 94-105 | 97-108 | 100.3 |
| safflower oil | 148 | 122-141 | 140-150 | 140-152 |
| soybean oil | 115-140 | 122-134 | 120-141 | 137-143 |
| sunflower or sunflower-seed oil | 124-134 | 129-136 | 125-136 | 130-135 |

The iodine values of other fatty oils specified above are:

| IODINE VALUE | | | | |
|---|---|---|---|---|
| UNSATURATED OIL | LANGE (pp. 760-763) | LANGE (pp. 756-759) | KIRK-OTHMER | VAN NOSTRANDS |
| almond oil | 93-96.5 | 93-103.4 | 95 | |
| hempseed oil | 141 | 145-161.7 | 140-175 | |
| linseed oil | 179-192 | 175-202 | 170-204 | |
| sesame oil | 110-116 | 103-117 | 103-116 | 103-114 |
| tung oil | 144-159 | 163-171 | 160-175 | |
| walnut oil | 150 | 139-150 | 155.7 | |
| wheat-germ oil | | | 128.6 | |

The iodine values of other oils that can be used are:

## IODINE VALUE

| UNSATURATED OIL | LANGE (pp. 760-763) | LANGE (pp. 756-759) | KIRK-OTHMER |
|---|---|---|---|
| apricot-kernel oil | 99.4-108 | 100-108.7 | 108.7 |
| candlenut oil | | | 164.3 |
| Aleurites moluccana | | 163-164 | |
| Aleurites triloba | | 139-143.8 | |
| cod-liver oil | 130-170 | 137-166 | 118-190 |
| dehydrated castor oil | | | 112-135 |
| grapefruit seed oil | | | 100.8 |
| herring oil | | 102-149 | 115-160 |
| kapok oil | | | 86-110 |
| menhaden oil | | 148-185 | |
| oiticica oil | | | 205-220 |
| orangeseed oil | | | 97.6 |
| perilla oil | 200-211 | 185-206 | 193-208 |
| poppy-seed oil | 139 | 128-141 | 133.4 |
| ravison oil | | | 108.5 |
| rice-bran oil | | | 99.9 |
| sardine oil | | 150-193 | California: 170-188<br>Japanese: 160-190 |
| seal oil | 186-201 | 130-152 | 162.2 |
| sorghum oil | | | 119.0 |
| stillingia oil | | | 185.8 |
| whale oil | 131 | 90-146 | 110-135 |

The following oils or fats have been found to be unsuitable for the process of this invention, either because they do not have substantial sorbing capability or do not sorb for a substantial time.

| IODINE VALUE | | | | |
|---|---|---|---|---|
| OIL OR FAT | LANGE (pp. 760-763) | LANGE (pp. 756-759) | KIRK-OTHMER | WEBSTER'S DEFINITION OF IODINE | MERCK & CO. INC. NO. 1989 |
| butterfat | | 26-38 | 25-42 | | |
| castor oil (not dehydrated) | 87-93 | 84 | 81-91 | | |
| cocoa butter | 33-39 | | 35-40 | | |
| coconut fat | 8.4-9 | 6.2-10 | 7.5-10.5 | 8-9.5 | |
| lard | 64.2 | 47-66.5 | 53-77 | | |
| oleic acid oil | | | | | 89.9 |
| olive oil | 86-90 | 79-98 | 80-88 | 77-91 | |
| tallow | 41.3 | 56-60.5 | 33.5 | | |
| | 25-40 | 35-45 | 41.2 | | |

The oil used in the present process must have an average iodine value greater than 90.

Even nonmineral used, waste or byproduct unsaturated oil or oil combinations from restaurants, renderers, or fish processors may be used if they have a sufficiently high average iodine value--greater than 90.

McGraw-Hill Encyclopedia of Science and Technology, Third Edition, states at Volume 4, page 327, that a good drying oil should have a high iodine value of about 130.

In general unsaturated oils contain a mixture of fatty acids, and the more unsaturated the oils are the higher will be their iodine value. The higher the degree of unsaturation and the higher the iodine value, the greater is the content of fatty acids having more than one double bond. All of the oils discussed above having an average iodine value greater than 90 are or contain unsaturated fatty acids, and preferably polyunsaturated fatty acids, that is, fatty acids with more than one double bond between carbon atoms such as linoleic acid and linolenic acid. Oleic acid or palmitoleic acid and ricinoleic acid have one double bond, linoleic acid and erucic acid have two double bonds, linolenic acid has three double bonds and arachidonic acid has four double bonds. Other polyunsaturated acids are licanic acid and eleostearic acid.

The weight percentage content of such acids is given in the following table for representative unsaturated oils.

| OIL | IODINE VALUE | SATURATED | OLEIC or OLEATE | LINOLEIC or LINOLEATE | ERUCIC | LINOLINEC or LINOLENATE | ELEOSTERIC or ELEOSTEARATE | LICANIC or LICANATE |
|---|---|---|---|---|---|---|---|---|
| Corn | 103-128 | b10.7 | 30.1 | 56.3 | | | | |
| cottonseed | 99-116 | a25<br>b27.2<br>c27 | 40<br>22.9<br>18.19 | 35<br>47.8<br>47-50 | | | | |
| crambe | | b | | | high proportion | | | |
| dehydrated castor oil | 112-135 | a5 | 10 | 85 | | 0.4 | | |
| linseed | 170-204 | a10 | 18 | 17 | | 55 | | |
| oticica | 205-220 | a10 | 6 | 10 | | | | 74 |
| peanut | 84-100 | b17.1<br>c18 | 61.1<br>40-52 | 21.8<br>25-32 | | | | |
| perilla | 185-208 | a7 | 14 | 16 | | 63 | | |
| rape | 94-108 | c | | | 40 | | | |
| safflower | 122-152 | c10 | 13 | 78 | | | | |
| sesame | 103-117 | c15 | 40 | 44 | | | | |
| soybean | 120-143 | a14<br>b13.4<br>c16 | 26<br>28.9<br>20-25 | 52<br>50.7<br>48-53 | | 8<br>7<br>5-9 | | |
| sunflower | 125-136 | c10 | 17-32 | 60-75 | | 0.3 | | |
| tung | 160-175 | a5 | 7 | 3 | | | | 85 |

a Lange, Handbook of Chemistry, Tenth Edition, 1961, page 772
b McGraw-Hill, Encyclopedia of Science and Technology, Third Edition, Vol. 3, page 58 and Vol. 5, page 200
c Van Nostrand's Scientific Encyclopedia, Sixth Edition, tables on pages 2915, 2916 and 2917

Some of the oils specified above may be boiled oil, sulfonated oil, washed oil, steam-distilled oil, sonically-treated oil, acid-treated oil, alkali-treated oil, solvent-extracted oil, burned oil, catalytically-burned oil, oxidized oil, reduced oil, aldehyded oil, chlorinated oil, sulfonated oil, gravity-separated oil or blown oil to increase their suitability or effectiveness.

It is to be noted that the oils used in the process of the present invention exclude mineral oil and essential oils. Also oils having an average iodine value not greater than 90, such as olive oil with an iodine value 86 to 90 or 79 to 88 or 77 to 91, or undehydrated castor oil with an iodine value of 87 to 93 or 84 or 81 to 91, are not suitable for the present process.

In order to facilitate spraying and dispersion of the scrubbing liquid containing unsaturated fatty oil, it is preferred that the oil be emulsified with water to provide a scrubbing liquid having a viscosity lower than the viscosity of the oil. For this purpose the preferred proportions depend to a great extent on the characteristics of the pollution and the method of treatment. For example, in a typical rendering application where beef, poultry and fish are being reduced and the air contains noxious or odorous components in the amount of approximately 400 ppm, scrubbing liquid containing, by weight, 28 percent peanut oil, 2 percent wetting agent, 1 percent acetic acid, 1 percent propylene glycol and 70 percent water can be added at the rate of 8 ozs. per hr. ($6.3 \times 10^{-5}$ Kg/s) to a scrubbing system handling an airflow of 30,000 cfm. ($14.2 \ m^3s^{-1}$).

The acetic acid combines with a significant proportion of ammonia and volatile ammoniacals sorbed by the oil emulsion causing them to be precipitated for collection. The propylene glycol assists in sorbing sulfur-bearing vapors such as methyl or ethyl mercaptans. Substantially the entire balance of the scrubbing liquid is water, but the scrubbing liquid could include a small amount of emulsifier, detergent and/or wetting agent. The proportion of such additive or additives should be in the range of one-half percent to five percent by weight, a preferred amount being 1-1/2 percent. The detergent or wetting agent improves the contact between the air and the sorbent to increase the effectiveness of the scrubbing liquid in removing pollutants from the air stream, especially particulates. Suitable detergent or wetting agents are commercial wetting agents or detergents such as anionic wetting agent Atlas® G. 3300, cationic detergent B10-DAC® 50-22 of Bio Lab, Inc., Decatur, Georgia, and nonionic detergent Van Wet® 9N9 of Van Waters and Rogers, Seattle, Washington.

Depending on the circumstances of use .001 percent to 100 percent of the scrubbing liquid by weight should be oil, a preferred proportion for biological processing operations being .001 percent to 8 percent, for chemical operations 1 percent to 10 percent, for organic solvents 10 percent to 50 percent, for organic waste .01 percent to 6 percent and for incineration process emissions .001 percent to 2 percent. The scrubbing solution may also contain suitable reactants or catalysts including metals, oxidants, reducers, aldehydes and amines to decompose or complex sorbed chemicals to facilitate their removal from the scrubbing liquid.

In general the warmer the emission the lower will be the concentration of oil required in the scrubbing liquid and the colder the emission the higher will be the concentration of oil required in the scrubbing liquid. Where the emission is warmer more scrubbing liquid or more concentrated scrubbing liquid is desirable to compensate for evaporation losses of the scrubbing liquid. In order to recondition the oil of the scrubbing liquid for reuse, the oil and water are separated and pollutants removed from the air are stripped from the oil. Such stripping can be effected by the use of steam in accordance with known procedures. The steaming may be effected in successive stages under pressures of 100 to 150 pounds gauge (0.689 to 1.034 MPa) and temperatures of 425 degrees to 475 degrees F. (218 degrees to 246 degrees C.). Steam stripping of fatty oils is disclosed in the Wecker U.S Patent 1,622,126, issued in 1927.

Heating of the fatty oil can be effected by the use of a heating agent designated Dowtherm which is a eutectic mixture consisting of 26.5 percent diphenyl and 73.5 percent diphenyl oxide.

Also, stripping of the fatty oil could be accomplished continuously by use of the deodorization procedure disclosed in Dean U.S Patent 2,280,896, issued April 28, 1942.

An important specific utilization of scrubbing liquid including vegetable or marine oil for air purification is for the removal of styrene from air. The affinity of the oil for styrene and polystyrene will enable the aqueous scrubbing liquid in which the present invention is embodied to remove such materials from an air stream. The styrene material can then be stripped from the oil by polymerizing the styrene to form solid particulate polystyrene which will be precipitated from the oil. Such polymerization is effected by light, preferably by sunlight, but, alternatively or supplementally, by ultraviolet light or other known conventional means such as by the use of catalysts. The water portion can then be separated from the oil by stratification at which time much of the polymerized and unpolymerized styrenes will precipitate and settle by gravity in the water portion. Decanting either to a sewer or container for transport to an incinerator may then be effectuated. The separated oil portion of the scrubbing liquid may be washed and makeup water added for reuse. The scrubbing liquid rejuvenation process may also be conducted on a continuous basis with makeup water and oil being supplied continuously in sufficient quantity to replace operational losses.

As a specific example, where the emission includes approximately 106 ppm methyl styrene vapors in 3000 cfm (1.42 $m^3s^{-1}$), approximately 5 percent of scrubbing solution containing, by weight, 30 percent fatty oil, 2 percent wetting agent and 70 percent water is added at the rate of approximately 10 ozs. (0.28 Kg) of fresh scrubbing liquid per operating hour. The styrene can be precipitated from the used scrubbing liquid by ultraviolet light. An intensity of 1800 to 2300 angstrom units (1.8 x $10^{-7}$m to 2.3 x $10^{-7}$m) is preferred.

An alternative specific formula for removing styrene from air where ultraviolet light is not used to precipitate the styrene from the scrubbing solution could be as follows:

|  | percent by weight |
|---|---|
| safflower oil | 24.0 |
| wetting agent (Atlas® G-3300) | 1.0 |
| silicone (antifoam) | 1.0 |
| water | 73.0 |
| titanium tetrachloride | .5 |
| aluminum chlorhydrate | .5 |
|  | 100.0 |

The titanium tetrachloride and aluminum chlorhydrate form innocuous complexes with styrene.

In another example where the emission contains mixed solvents from a paint booth, sunflower oil can be atomized into the emission. The oil and sorbed solvents are then collected and rinsed with water. Preferably some detergent is used to effectuate more complete solvent removal. The oil purged of pollutants may be resprayed into the emission.

Another particularly beneficial use of a scrubbing liquid including fatty oil is for the removal of acrolein from air. Acrolein is a toxic, colorless liquid aldehyde (CH2 = CHCHO) that has an acrid odor and irritating vapors and is produced in meat or offal cooking operations. Acrolein can be stripped from the fatty oil by treating the oil with urea and ammonia to form acrolein complex precipitates. Suitable ammonia sources are amines. A representative formula for treating the oil is:

|  | percent by weight |
|---|---|
| peanut oil | 28 |
| wetting agent (Atlas® G-3300) | 1 |
| silicone (antifoam) | 1 |
| water | 70 |
|  | 100 |

This basic formula is additionally mixed with water from 1 to 10 percent concentration by weight or volume for use as a scrubbing liquid. The percentage of concentrate depends on the volume and concentration of noxious or odorous vapor components in a gas stream.

After the pollutants are stripped from the fatty oil, it is again mixed in the desired proportions with water, emulsifier, detergent and/or wetting agent to reconstitute the scrubbing liquid.

An example that may be used for the control of mixed biological odors resulting from a rendering plant is as follows:

|  | percent by weight |
|---|---|
| sunflower oil | 20.0 |
| propylene glycol | 1.0 |
| sulfuric acid | 0.5 |
| wetting agent (Atlas® G-3300) | 0.5 |
| water | 78.0 |
|  | 100.0 |

In this instance the emission stream is alkaline, containing a significant proportion of ammonia which will be sequestered by the oil emulsion and complexed by the added acid. The acid need not be incorporated in the above formula but can be used later to rinse the emulsion, thereby complexing sorbed ammonia. If a greater proportion of the emission is in more complex ammoniacal forms such as noxious amines, aldehyde, metals, catalysts, oxidants and/or reducers can be added in modest proportions to complex them.

The scrubbing liquid can be added to an emission system in a wide variety of concentrations depending on the equipment design but would typically be metered into a system which already contained a substantial portion of water, several hundred gallons (1 gallon = $3.785 \times 10^{-3}$ m³), for example, and, depending on the flow rate of the emission and the pollutant concentration, such scrubbing liquid would be added to the reservoir water in amounts in the order of 2-3 percent, then metered at a continuous rate of the order of 5 ozs.(0.14Kg) per 2,500 cfm (1.2 m³s⁻¹) per hour during operation.

Where amines create an odor problem selected aldehydes, such as benzaldehyde, could be added to the scrubbing liquid. If fatty acids cause a problem amines or other bases could be added to the scrubbing liquid. Instead of adding such substances to the scrubbing liquid an appropriate complexing agent as suggested above could be used to rinse or treat the scrubbing liquid to prepare it for recycling.

The scrubbing liquid of the present invention can be used in various types of contact means for effecting contact of polluted gas with the scrubbing liquid, such as conventional air purification scrubbers or filters of excelsior, matted or woven shredded paper or shavings, for example, on which or over which the scrubbing liquid is dripped.

Specific noxious odors which have been virtually eliminated by contact with scrubbing liquid for this invention are acrolein, octanol-1, octanol-2 (octyl alcohol), triethylamine, pyridine, cell cream (putrified), i.e. residue from dead animal cells including yeast cells, such as in breweries, styrene, butyric acid, phenol, ammonium thioglycolate, amyl acetate, ammonium hydroxide, p-anisaldehyde, furfural, formaldehyde, methylethyl ketone, glacial acetic acid, propionic acid, toluene, valeric acid, diethylamine, methylamine, methyl chloride, carbon tetrachloride, petroleum distillate, malathion, orthodichlorobenzene, cadaverine, skatol, soluble fish waste, beef rendering, chicken rendering, onion oil, garlic oil, volatile amines, volatile fatty acids, sewage, sulfurous material including hydrogen sulphide, and carbon disulphide, trichloroethylene, pentachlorophenol, paint, paint solvents, hydrocarbon material, plastics and combustion products.

Of the odorous materials listed above, the following are extensively soluble in water, namely, triethylamine, pyridine, butyric acid, phenol, ammonium hydroxide, hydrogen sulphide, formaldehyde, methylethyl ketone, glacial acetic acid, propionic acid, diethylamine, methylamine, methyl chloride and cadaverine, whereas the following substances are either completely insoluble in water or only slightly soluble, namely, octanol-1, octanol-2, styrene, carbon disulphide, amyl acetate, p-anisaldehyde, furfural, toluene, valeric acid, carbon tetrachloride, orthodichlorobenzene, petroleum distillate, trichloroethylene and pentachlorophenol. The treatment of polluted air with an oil containing an unsaturated vegetable or marine oil and having an average iodine value greater than 90 removes both such water-soluble pollutants and such water-insoluble pollutants with the same scrubbing liquid.

A laboratory apparatus for testing the effectiveness of various scrubbing liquids for removing odorants from air is shown in the drawings. The odorant material, usually in liquid form, is supplied in an Erlenmeyer flask 1 to which air is admitted through a filter 2. Odorant-charged air is withdrawn from the upper portion of the flask by an air pump 3 through a discharge conduit 4. A flowmeter 5 is connected in such line to indicate the amount of air flowing through the conduit 4. Such airflow can be regulated by a valve 6 in the conduit.

The polluted air discharge conduit 4 can be connected to a conduit 7 by appropriate setting of a three-way valve 8. The conduit 7 can be connected to an air discharge line 9 having an outlet 10 if a three-way valve 11 is set properly to connect conduits 7 and 9. The discharged air can be checked olfactorily at the outlet 10 for residual odor.

To identify the odorant by instrumentation, the three-way valve 11 can be turned to connect the conduit 7 to the inlet conduit 12 leading to a Wilkes Miran scanning infrared spectrographic analyzer 13. From such analyzer, the air is discharged through a conduit 14 to the discharge conduit 9. The conduit 14 may have a check-valve 16 in it to prevent reverse flow through the analyzer. The analyzer may be provided with a visual meter 17 for indicating the intensity of the odor and a graphic recorder 18 may be used to record fluctuations in the odor intensity.

To determine the effectiveness of a particular scrubbing liquid the three-way valve 8 can be turned to divert the flow of odorous air from the conduit 7 to the conduit 19 which is connected to the intake of a blender 20 containing scrubbing liquid 21. From the blender air purged of odorant is discharged through a conduit 22 in which a dryer 23 containing calcium chloride is located. The conduit 22 may be connected either to an outlet 24 where the air can be checked olfactorily or to a conduit 25 connected to the Wilkes Miran analyzer by appropriate adjustment of a three-way valve 26.

The blender 20 can operate either in a batch operation by a predetermined quantity of the scrubbing liquid 21 simply being placed in the blender, or the scrubbing liquid can be recirculated to replace the scrubbing liquid in the blender continuously. In the latter instance, scrubbing liquid can be contained in a reservoir 28 which will be very large as compared to the volume of the blender container. From such reservoir scrubbing liquid is supplied to the blender container continuously through the supply conduit 29 by a pump 30. The amount of scrubbing liquid admitted to the blender can be regulated by a metering valve 31.

Scrubbing liquid 21 is discharged from the blender container on a continuous basis to maintain the level of scrubbing liquid in the blender constant by discharging scrubbing liquid continuously from the blender container through the conduit 32. A condenser or cooler 33 is interposed in the conduit 32 to maintain the temperature of the scrubbing liquid at a predetermined value. Cold water can be supplied to the cooler or condenser through a supply conduit 34 and discharged from the cooler through a discharge conduit 35. From the cooler the scrubbing liquid is returned to the reservoir 28 through the conduit 36.

The amount of scrubbing liquid discharged from the blender container can be regulated by a metering valve 37 to balance the amount of scrubbing liquid supplied to the blender container through the supply conduit 29. Alternatively a portion of the outlet conduit 32 can be located at a level relative to the blender container such that if the level of the liquid in the blender container tends to exceed a predetermined level the excess scrubbing liquid will be discharged from the blender container through the outflow conduit 32, in which case the regulating valve 37 can be omitted.

Initially, the three-way valve 8 may be set to connect conduit 4 to conduit 7 and three-way valve 11 may be set to connect conduit 7 to conduit 9. The air pump 3 can then draw air through the filter 2 into the Erlenmeyer flask 1 to pick up odorant. The odorized air passing through the conduits 4, 7 and 9 will be discharged through the outlet 10 so that the odor can be detected olfactorily. The three-way valve 8 can then be changed to connect conduit 4 to conduit 19 for supplying the odorized air to the blender, and three-way valve 26 can be set to connect discharge conduit 22 to outlet 24. The purged air discharged through outlet 24 can then be compared olfactorily with the odorized air previously discharged through outlet 10 to detect the effectiveness of odor removal by the scrubbing liquid 21.

As an alternative operation, instead of comparing the odorized and purged air olfactorily, the three-way valve 11 can be set to connect the conduit 7 to the conduit 12 so that the Wilkes Miran analyzer 13 will detect and indicate the odorant content of the air visually and can record such content. Valve 8 can then be altered to connect conduit 4 to conduit 19, and valve 26 can be altered to connect conduit 22 to conduit 25 so that the air purged of odorant by the scrubbing liquid can be circulated through the Wilkes Miran analyzer 13 for comparison with the record made of the odorized air.

Whether the air is checked olfactorily or by the Wilkes Miran analyzer the blender can be operated with the single charge of purging liquid and the analyzer can be operated over a period of time to determine the rapidity with which the effectiveness of the scrubbing liquid decreases. Alternatively, the scrubbing liquid recirculation system described above can be operated in which event the purging effect of the scrubbing liquid 21 should remain substantially constant.

Purging of various types of odorants from air occurred utilizing the following variety of types of oil and water emulsions in the blender, namely peanut, walnut, safflower, tung, herring, sunflower seed, soybean, apricot-kernel, almond, sesame, rice bran, pumpkin seed, wheat germ and corn. The rate of odorant air flow through the blender was 1800 cc($1.8 \times 10^{-3}$m$^3$) per minute at 28 degrees C. In each instance the analyzer showed approximately 99 percent purging of the odorant and no odor could be detected olfactorily in the treated air.

**Claims**

1. A process for purifying polluted air which comprises contacting the polluted air with scrubbing liquid containing oil, characterised in that the oil has an average iodine value greater than 90 and is an unsaturated vegetable or marine oil.

2. A process according to claim 1, further characterised by contacting the air with the scrubbing liquid in air and liquid contact means.

3. A process according to claim 1, further characterised by separating from the scrubbing liquid that has been contacted by polluted air pollutant sorbed from the air by such scrubbing liquid and thereby reconditioning the scrubbing liquid for reuse in contacting additional polluted air.

4. A process according to any of claims 1 to 3 wherein the oil is a drying or semidrying oil.

5. A process according to any of claims 1 to 4, further characterised by the air to be purified being polluted with styrene.

6. A process according to claim 5, further characterised by treating the scrubbing liquid that has been contacted by polluted air with ultraviolet light radiation to separate from such scrubbing liquid styrene removed from the air by such scrubbing liquid.

7. A process according to any of claims 1 to 4, further characterised by the air to be purified being polluted with acrolein.

8. A process according to claim 7, further characterised by, after contacting the air with the scrubbing liquid, mixing the scrubbing liquid with urea and ammonia for forming acrolein complex precipitates and thereby removing acrolein from the scrubbing liquid.

9. A process according to any of claims 1 to 8, further characterised by mixing water with the oil to make an aqueous scrubbing liquid for contact with the polluted air.

10. A process according to claim 9, further characterised by mixing a surfactant with the oil and water in making the scrubbing liquid for facilitating contact of the oil content of the scrubbing liquid with the pollutant.

11. A process according to any of claims 1 to 10, further characterised by the scrubbing liquid including, in addition to the oil, an ingredient selected from amines, oxidants, reducing agents, aldehydes, metals, and catalysts.

12. A composition comprising oil for purifying polluted air by contact with the polluted air for sorbing pollutant from such air, characterised in that the oil has an average iodine value greater than 90 and is an unsaturated vegetable or marine oil.

13. A composition according to claim 12, wherein the oil is mixed with water.

14. A composition according to claim 13, further characterised by the oil in the composition being emulsified with the water so that the composition has a viscosity lower than the viscosity of the oil.

15. A composition according to claim 13 or claim 14, further characterised by the composition having a surfactant mixed with the oil and the water for facilitating contact of the oil content of the composition with polluted air.

16. A composition according to any of claims 12 to 15 wherein the oil is a drying or semidrying oil.

17. A composition according to any of claims 12 to 16, further characterised by the composition including an ingredient selected from amines, oxidants, reducing agents, aldehydes, metals, and catalysts.

**Patentansprüche**

1. Verfahren zur Reinigung verschmutzter Luft, das das In-Kontakt-Bringen der verschmutzten Luft mit ölhaltiger Waschflüssigkeit umfaßt, dadurch gekennzeichnet, daß das Öl eine durchschnittliche Jodzahl von größer als 90 hat und ein ungesättigtes Pflanzen- oder Meeres-Öl ist.

2. Verfahren nach Anspruch 1, weiter gekennzeichnet durch Kontaktieren der Luft mit der Waschflüssigkeit in Luft- und Flüssig-Kontaktmitteln.

3. Verfahren nach Anspruch 1, weiter gekennzeichnet durch Abtrennen von der Waschflüssigkeit, die mit

14

EP 0 198 050 B1

der verschmutzten Luft in Kontakt gebracht wurde, der Verunreinigung, die aus der Luft von dieser Waschflüssigkeit sorbiert wurde und durch Aufbereiten der Waschflüssigkeit zur Wiederverwendung beim In-Kontakt-Bringen mit weiterer, verschmutzter Luft.

4. Verfahren nach einem der Ansprüche 1 bis 3, worin das Öl ein trocknendes Öl oder ein halbtrocknendes Öl ist.

5. Vefahren nach einem der Ansprüche 1 bis 4, weiter dadurch gekennzeichnet, daß die zu reinigende Luft mit Styrol verschmutzt ist.

6. Verfahren nach Anspruch 5, weiter gekennzeichnet durch die Behandlung der Waschflüssigkeit, die mit der verschmutzten Luft in Kontakt gebracht wurde, mit ultravioletter Lichtbestrahlung, um von dieser Waschflüssigkeit Styrol zu trennen, das aus der Luft von dieser Waschflüssigkeit entfernt wurde.

7. Verfahren nach einem der Ansprüche 1 bis 4, weiter dadurch gekennzeichnet, daß die zu reinigende Luft mit Acrolein verschmutzt ist.

8. Verfahren nach Anspruch 7, weiter dadurch gekennzeichnet, daß nach dem Kontaktieren der Luft mit der Waschflüssigkeit, die Waschflüssigkeit mit Harnstoff und Ammoniak gemischt wird, um Acroleinkomplex-Fällungsprodukte zu bilden und dadurch Acrolein aus der Waschflüssigkeit zu entfernen.

9. Verfahren nach einem der Ansprüche 1 bis 8, weiter gekennzeichnet durch das Vermischen von Wasser mit dem Öl, um eine wässrige Waschflüssigkeit zum Kontaktieren mit der verschmutzten Luft herzustellen.

10. Verfahren nach Anspruch 9, weiter gekennzeichnet durch Vermischen eines Tensids mit dem Öl und Wasser, um die Waschflüssigkeit herzustellen, um den Kontakt des Ölgehalts der Waschflüssigkeit mit der Verunreinigung zu ermöglichen.

11. Verfahren nach einem der Ansprüche 1 bis 10, weiter dadurch gekennzeichnet, daß die Waschflüssigkeit zusätzlich zu dem Öl einen Bestandteil einschließt, ausgewählt aus Aminen, Oxidationsmitteln, Reduktionsmitteln, Aldehyden, Metallen und Katalysatoren.

12. Zusammensetzung, die Öl umfaßt, zur Reinigung von verschmutzter Luft durch Kontaktieren mit der verschmutzten Luft zum Sorbieren von Verunreinigung aus derartiger Luft, dadurch gekennzeichnet, daß das Öl eine durchschnittliche Jodzahl von größer als 90 hat und ein ungesättigtes Pflanzen- oder Meeres-Öl ist.

13. Zusammensetzung nach Anspruch 12, worin das Öl mit Wasser vermischt wird.

14. Zusammensetzung nach Anspruch 13, weiter dadurch gekennzeichnet, daß das Öl in der Zusammensetzung mit dem Wasser emulgiert wird, so daß die Zusammensetzung eine Viskosität hat, die geringer ist als die Viskosität des Öls.

15. Zusammensetzung nach Anspruch 13 oder 14, weiter dadurch gekennzeichnet, daß die Zusammensetzung ein mit dem Öl und Wasser vermischtes Tensid hat, um den Kontakt des Ölgehalts der Zusammensetzung mit der verschmutzten Luft zu erleichtern.

16. Zusammensetzung nach einem der Ansprüche 12 bis 15, worin das Öl ein trocknendes Öl oder ein halbtrocknendes Öl ist.

17. Zusammensetzung nach einem der Ansprüche 12 bis 16, weiter dadurch gekennzeichnet, daß die Zusammensetzung einen Bestandteil umfaßt, ausgewählt aus Aminen, Oxidationsmitteln, Reduktionsmitteln, Aldehyden, Metallen und Katalysatoren.

**Revendications**

15

1. Procédé de purification d'air pollué qui comprend la mise en contact de l'air pollué avec un liquide de lavage contenant de l'huile, caractérisé en ce que l'huile a un indice moyen d'iode supérieur à 90 et est une huile insaturée végétale ou marine.

2. Procédé selon la revendication 1, caractérisé de plus par la mise en contact de l'air avec le liquide de lavage dans un moyen de contact de l'air avec le liquide.

3. Procédé selon la revendication 1, caractérisé de plus par la séparation, du liquide de lavage qui a été mis en contact avec l'air pollué, des agents polluants absorbés de l'air par ce liquide de lavage pour ainsi reconditionner le liquide de lavage pour une réutilisation dans la mise en contact avec de l'air pollué supplémentaire.

4. Procédé selon l'une quelconque des revendications 1 à 3 où l'huile est une huile siccative ou semi-siccative.

5. Procédé selon l'une quelconque des revendications 1 à 4, caractérisé de plus en ce que l'air à purifier est pollué par du styrène.

6. Procédé selon la revendication 5, caractérisé de plus par le traitement du liquide de lavage qui a été mis en contact avec l'air pollué au moyen d'un rayonnement d'une lumière ultraviolette pour séparer, de ce liquide de lavage, le styrène enlevé de l'air par ce liquide de lavage.

7. Procédé selon l'une quelconque des revendications 1 à 4, caractérisé en ce que l'air à purifier est pollué par de l'acroléine.

8. Procédé selon la revendication 7, caractérisé de plus en ce qu'après mise en contact de l'air avec le liquide de lavage, on mélange le liquide de lavage avec de l'urée et de l'ammoniaque pour former des précipites complexes d'acroléine et ainsi enlever l'acroléine du liquide de lavage.

9. Procédé selon l'une quelconque des revendications 1 à 8, caractérisé de plus en ce qu'on mélange de l'eau à l'huile pour former un liquide aqueux de lavage pour mise en contact avec l'air pollué.

10. Procédé selon la revendication 9, caractérisé de plus en ce qu'on mélange un agent tensio-actif à l'huile et à l'eau pour produire le liquide de lavage afin de faciliter le contact de la teneur en huile du liquide de lavage avec l'agent polluant.

11. Procédé selon l'une quelconque des revendications 1 à 10, caractérisé de plus en ce que le liquide de lavage contient, en plus de l'huile, un ingrédient choisi parmi des amines, des oxydants, des agents réducteurs, des aldéhydes, des métaux et des catalyseurs.

12. Composition comprenant de l'huile pour purifier de l'air pollué par mise en contact avec l'air pollué pour l'absorption des agents polluants de cet air, caractérisée en ce que l'huile a un indice moyen d'iode supérieur à 90 et est une huile végétale ou marine insaturée.

13. Composition selon la revendication 12, caractérisée en ce que l'huile est mélangée à l'eau.

14. Composition selon la revendication 13, caractérisée de plus en ce que l'huile dans la composition est émulsionnée avec l'eau de manière que la composition ait une viscosité plus faible que la viscosité de l'huile.

15. Composition selon la revendication 13 ou la revendication 14, caractérisée de plus en ce que la composition a un agent tensio-actif qui est mélangé à l'huile et à l'eau pour faciliter le contact de la teneur en huile de la composition avec l'air pollué.

16. Composition selon l'une quelconque des revendications 12 à 15 où l'huile est une huile siccative ou semi-siccative.

17. Composition selon l'une quelconque des revendications 12 à 16, caractérisée de plus en ce que la

16

composition contient un ingrédient choisi parmi des amines, oxydants, agents réducteurs, aldéhydes, métaux et catalyseurs.